# EUROPEAN PATENT SPECIFICATION

(11) **EP 2 392 866 B1**
(45) Date of publication and mention of the grant of the patent: **06.07.2016**
(21) Application number: 11168590.5
(22) Date of filing: 02.06.2011
(51) Int. Cl.: F24D 19/00

(54) **Method of flushing a central heating system**
Verfahren zur Durchspülung eines zentralen Heizungssystems
Procédé de rinçage d'un système de chauffage central

(30) Priority: 04.06.2010 GB 201009365
(43) Date of publication of application: 07.12.2011
(73) Proprietor: Adey Holdings (2008) Limited, Cheltenham Gloucestershire GL51 8NR (GB)
(72) Inventor: Adey, Christopher, Cheltenham, Gloucestershire GL52 6PA (GB)
(74) Representative: Games, Robert Harland

(56) References cited:
- EP-A1- 0 723 822
- EP-A1- 1 731 849
- GB-A- 2 351 785
- GB-A- 2 405 671
- GB-A- 2 450 501
- GB-A- 2 457 988
- JP-A- H07 280 342
- JP-A- S60 147 059
- US-A1- 2003 223 305

## Description

The present invention relates to a method of flushing a central heating system for removing magnetite and other contaminants from the central heating system water.

### BACKGROUND OF THE INVENTION

When a central heating circuit has been in operation for some time, there is a tendency for magnetite to build up as a sludge, which settles in the system, for example, in the radiators, pipe work and boiler heat exchanger. This leads to a number of problems including cold spots in the radiators, reduced heat transfer in the heat exchanger of the boiler resulting in slower warm up time, increased noise in the system and pump failure. Furthermore, in hard water areas there is a tendency for limescale to accumulate in the heat exchanger, which also reduces the efficiency of the boiler.

In order to remove the sludge and loose limescale deposits and restore the system to its optimum operating condition, it is known to flush the sludge and deposits from the system in a process known as "power flushing", also known as "jet flushing and hard flushing". Power flushing involves the connection of a pump to the system, which pumps water at a high velocity and pressure through the system, to loosen and mobilise corrosion and limescale deposits, and to suspend them in rapidly moving water. Specialist cleansing chemicals are added to the water to improve the effectiveness of the cleaning process. Once loosened, the unwanted debris is purged from the system with the flow of clean water.

A method according to the preamble of claim 1 is known from document GB 24 57 988.

The disadvantage of power flushing is that it involves connection of a separate specialist and expensive pump to the central heating system. The pump flushes water through the system at a high flow rate and at significant pressure. Usually, individual radiators are purged one by one, and the cleaning process results in a high volume of waste or 'spent' water, which can typically amount to around 2,800 litres per power flush for a typical domestic heating circuit. The use of such large amounts of water also dilutes the cleansing chemical additive and reduces its effectiveness.

It is an object of the invention to provide a method of flushing a central heating system which reduces or substantially obviates the above mentioned problems.

### SUMMARY OF THE INVENTION

According to the present invention there is provided a method of flushing a central heating system having a heat exchanger, a pump, at least one radiator and at least one circuit of pipework, comprising the steps of:
a. draining or substantially draining the central heating system of system water,
b. connecting a magnetic filter across two points in the at least one circuit of pipework,
c. partially filling the central heating system with system water,
d. operating the pump to cause circulation of system water around the central heating system and through the filter,
e. applying vibration to the or each radiator,
f. removing any debris collected at the filter, and
g. re-filling the central heating system with system water to an operational level.

Preferably, the steps are carried out sequentially in the order a) to e).

The magnetic filter may comprise two separate chambers, each housing a magnetic filter. By using two separate chambers, the effectiveness of the filtration is improved.

At least part of the piping connecting the magnetic filter to the circuit of pipe work may be transparent. This enables the clearness of the system water to be assessed as the flushing method is carried out.

A cleaning product is preferably added to the system water for improving the effectiveness of the method. The cleaning product is preferably added between steps b) and d).

Preferably the method includes the step of isolating system water flow through the central heating system to each radiator in turn, and applying vibration to the radiator, through which system water is arranged to be passing.

In this way, the full flow rate of water passing through the system acts to carry away sediment disturbed in one radiator at a time. By allowing the system water to flow clear through the filter on targeting of a particular radiator, the person carrying out the method can be sure that a particular radiator is clear of sediment/sludge.

A vibrator device including an SDS hammer drill and a substantially flat ended hammer bit is used to apply vibration to each radiator. When a particular radiator is selected, the other radiators are turned off so that flow is only through the selected radiator, and then the vibration should ideally be applied. Only a short period of vibration is required to loosen sediment in the radiator.

The central heating system may be fully drained and refilled for commissioning after step g). This final draining removes the water with cleaning agent from the system.

Preferably, a rust inhibitor is added to the central heating system water prior to commissioning of the central heating system. The inhibitor serves to reduce corrosion of the system in normal operation.

The method enables, for example a domestic central heating system to be flushed in a fraction of the time that a usual power flush would take. The flush is most preferably carried out hot, which increases the effectiveness of the process and also provides a time saving. A power flushing machine, for example, including a separate pump is not required, because the method utilises the pump of the central heating system.

### BRIEF DESCRIPTION OF THE DRAWINGS

For a better understanding of the present invention, and to show more clearly how it may be carried into effect, reference will now be made, by way of example, to the accompanying drawings, in which:
Figure 1 shows a schematic perspective view of a domestic heating system with a flushing unit connected for flushing the system of sediment/sludge; and
Figure 2 shows a schematic perspective view of an SDS tool for use in vibrating a radiator.

### DETAILED DESCRIPTION OF THE ILLUSTRATIVE EMBODIMENTS

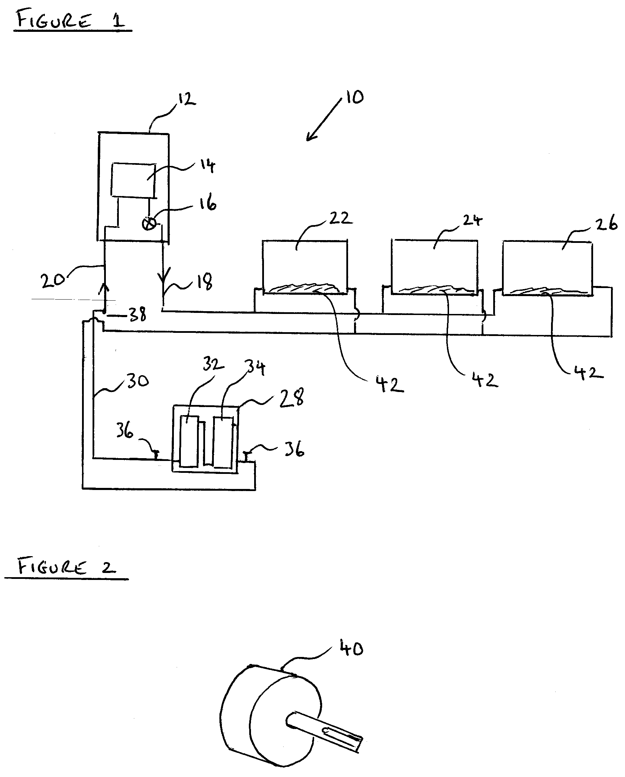

Referring firstly to Figure 1, a domestic central heating system with flushing unit connected is generally indicated at 10. A domestic boiler 12 including a heat exchanger 14 and pump 16 is connected to a radiator circuit with flow and return pipes 18, 20. In the arrangement shown there are three radiators 22, 24, 26, but there may be more or less radiators and flow/return pipes. A magnetic filter arrangement 28 is connected across the return pipe 20 by transparent hoses 30, which enables the colour of the system water to be seen during flushing of the system 10. The water is discoloured when it is carrying contaminants, such as black iron oxide, but runs substantially clear when the contaminant is removed. Hence the effectiveness of the flushing can be visually confirmed. The magnetic filter arrangement 28 includes two magnetic filters in respective chambers 32, 34 connected in series. Valves 36, for example, turn valves, are provided on the inlet and outlet to the magnetic filter arrangement enabling straightforward isolation of the filters for cleaning.

The connection of the hoses 30 to the return pipe 20 is made by a hose to valve connection 38, which may be utilised in normal operation of the central heating system 10 for fitting of a permanent magnetic filter. The fittings of the permanent filter and hose to valve connector are ideally the same to enable straightforward removal of the permanent filter and connection of the larger, more powerful magnetic filter arrangement 28 for flushing. The use of two magnetic filters in series provides improved performance and substantially removes all iron oxide contamination in a single pass through the flushing unit.

Figure 2 shows a flat ended SDS tool 40 for use with an SDS hammer drill for vibrating the radiators to dislodge sediment/sludge 42 build up in the radiators, shown in Figure 1.

When the system 10 needs flushing, the operator will initially complete any necessary electrical checks and then isolate and drain the central heating system. It will be appreciated that some system water may remain in the circuit, which is dependent on the positioning and effectiveness of drain points provided in the circuit. The magnetic filter arrangement is then connected, ideally to the return pipe, 20, close to the boiler. As previously mentioned, this may be in the position of a permanent magnetic filter connected to the system. If no filter is present, then the system is interrupted and hose to valve connections 38 fitted. The transparent hoses 30 are connected to the hose to valve connections 30 and to the magnetic filter arrangement 28. In order to facilitate cleansing of the system, a cleaning agent or preparation is poured into the magnetic filter arrangement for circulation throughout the system 10.

The system 10 is then partially filled with water, for example, around half full. The heating system can then be heated up by the boiler with all of the radiators open for a period of around 15 minutes. The radiators will be hot at the bottom, but cold at the top due to there only being half the required system water for usual operation. The radiators are then cleared of sediment/sludge in turn, as explained below.

A radiator to be purged of sediment is selected, for example radiator 22, and the valves to the other radiators 24, 26 in the circuit are closed. With the system pump 16 running and the heating on, the radiator is vibrated or agitated using the tool 40 and an SDS drill using its hammer only function. The radiator need only be vibrated for a short period, say around 30 seconds. When the sediment is dislodged, it enters the circulating flow of system water and passes through the filter. Typically, after the vibration is applied, the system water to the filter 28 will run clear after around 5 to 10 minutes, as observed through the transparent hoses 30. Once the radiator is clean, the filters can be isolated using the valves 36 and removed for cleaning. The system may be shut down during this time, because the circuit is effectively cut when the valves 36 are closed.

Once cleaned, the method is repeated for the further radiators 24, 26 until all of the radiators have been cleaned. It will be appreciated that a circuit of any size can be cleaned using the method. If the radiators do not have a large build up of sludge, then it may not be necessary to clean the filters 32, 34 after vibration of every radiator.

Once all of the radiators have been cleaned, the system can be refilled with water, any air removed through bleed valves and the system commissioned in accordance with the system requirements. The system is then run for a period of around 10 minutes before being fully drained again. This final draining removes all suspended particles from the system and removes the cleaning agent, if used. The filter arrangement 28 can then be removed and the circuit re-established, for example, by fitting a magnetic filter for ongoing operation.

Finally the system is refilled with water, inhibitor is added, air is removed through the air bleed valves and the system is commissioned in accordance with the system/manufacturer requirements. A check for leaks is made and appropriate remedial action taken, where required.

The flushing method has been found to be faster and more cost effective than known power flushing methods. Furthermore, the method utilises the system pump, rather than a high power flushing pump. The water required for flushing is only twice the volume of the system, compared with a constant supply of water in known flushing methods. There is therefore a large water saving, which is environmentally advantageous. The method can be used for systems of any size, both domestic and commercial.

Although an illustrative embodiment of the invention has been shown and described, a wide range of modification, changes and substitution is contemplated in the foregoing disclosure within the scope of the claims. In some instances, some features of the invention may be employed without a corresponding use of the other features in accordance with the scope of the claims.

## Claims

1. A method of flushing a central heating system having a heat exchanger, a pump, at least one radiator and at least one circuit of pipe work, comprising the steps of
a. connecting a magnetic filter (28) across two points in the at least one circuit of pipe work,
the method is **characterized by** the steps of:
b. draining or substantially draining the central heating system of system water,
c. partially filling the central heating system with system water,
d. operating the pump (16) to cause circulation of system water around the central heating system and through the filter,
e. applying vibration to the or each radiator (22, 24, 26),
f. removing any debris collected at the filter, and
g. re-filling the central heating system with system water to an operational level.

2. A method as claimed in claim 1, in which the steps are carried out sequentially in the order b), a), c) to e).

3. A method as claimed in claims 1 or 2, in which the magnetic filter comprises two separate chambers (32, 34), each housing a magnetic filter.

4. A method as claimed in any preceding claim, in which at least part of the piping connecting the magnetic filter to the circuit of pipe work is transparent.

5. A method as claimed in any preceding claim, in which a cleaning product is added to the system water for improving the effectiveness of the cleansing process.

6. A method as claimed in claim 4, in which the cleaning product is added between steps b) and d).

7. A method as claimed in any preceding claim, including the step of isolating system water flow through the central heating system to each radiator in turn, and applying vibration to the radiator, through which system water is arranged to be passing.

8. A method as claimed in claim 6, in which a vibrator device including an SDS hammer drill and a substantially flat ended hammer bit is used to apply vibration to each radiator.

9. A method as claimed in any preceding claim in which the central heating system is fully drained and refilled for commissioning after step g).

10. A method as claimed in any preceding claim, in which an inhibitor is added to the central heating system water prior to commissioning of the central heating system.

## Patentansprüche

1. Verfahren zur Durchspülung eines zentralen Heizungssystems, das einen Wärmetauscher, eine Pumpe, mindestens einen Heizkörper und mindestens einen Rohrleitungskreislauf aufweist, das die folgenden Schritte umfasst:
a. Verbinden eines Magnetfilters (28) durch zwei Punkte in dem mindestens einen Rohrleitungskreislauf,
wobei das Verfahren durch die folgenden Schritte gekennzeichnet ist:
b. Entleeren oder im Wesentlichen Entleeren von Systemwasser aus dem zentralen Heizungssystem,
c. partielles Füllen des zentralen Heizungssystems mit Systemwasser,
d. Betätigen der Pumpe (16), um den Umlauf von Wasser in dem zentralen Heizungssystem und durch das Filter zu bewirken,
e. Anwenden von Schwingung auf den oder jeden Heizkörper (22, 24, 26),
f. Entfernen von gegebenenfalls vorhandenen, an dem Filter gesammelten Rückständen, und
g. erneutes Füllen des zentralen Heizungssystems mit Systemwasser bis zu einem betriebsfähigen Füllstand.

2. Verfahren nach Anspruch 1, wobei die Schritte aufeinanderfolgend in der Reihenfolge b), a), c) bis e) durchgeführt werden.

3. Verfahren nach Anspruch 1 oder 2, wobei das Magnetfilter zwei getrennte Kammern (32, 34) umfasst, die jeweils ein Magnetfilter unterbringen.

4. Verfahren nach einem der vorhergehenden Ansprüche, wobei zumindest ein Teil der Rohrleitungen, die das Magnetfilter mit dem Rohrleitungskreislauf verbinden, durchsichtig ist.

5. Verfahren nach einem der vorhergehenden Ansprüche, wobei ein Reinigungsprodukt dem Systemwasser beigemengt wird, um die Wirksamkeit des Reinigungsprozesses zu verbessern.

6. Verfahren nach Anspruch 4, wobei das Reinigungsprodukt zwischen den Schritten b) und d) beigemengt wird.

7. Verfahren nach einem der vorhergehenden Ansprüche, dass den Schritt des Isolierens des Systemwasserflusses durch das zentrale Heizungssystem zu jedem Heizkörper der Reihe nach und das Anwenden von Schwingung auf den Heizkörper umfasst, durch den der Durchfluss des Systemwassers vorgesehen ist.

8. Verfahren nach Anspruch 6, wobei eine Schwingungserzeugervorrichtung, die eine SDS-Schlagbohrmaschine und einen Schlageinsatz mit im Wesentlichen flachen Ende umfasst, verwendet wird, um eine Schwingung auf jeden Heizkörper anzuwenden.

9. Verfahren nach einem der vorhergehenden Ansprüche, wobei das zentrale Heizungssystem zur Inbetriebnahme nach dem Schritt g) vollständig entleert und wieder aufgefüllt wird.

10. Verfahren nach einem der vorhergehenden Ansprüche, wobei vor der Inbetriebnahme des zentralen Heizungssystems ein Inhibitor dem Wasser des zentralen Heizungssystems beigemengt wird.

## Revendications

1. Une méthode de rinçage d'une installation de chauffage central, comprenant un échangeur de chaleur, une pompe, au moins un radiateur, et au moins un circuit de tuyauterie, comportant les étapes suivantes :
a. connexion d'un filtre magnétique (28) en deux points dans le circuit de tuyauterie au nombre d'au moins un, la méthode étant **caractérisée par** les étapes suivantes :
b. purge, ou purge substantielle, de l'eau du circuit de l'installation de chauffage central,
c. remplissage partiel de l'installation de chauffage central avec de l'eau du circuit,
d. actionnement de la pompe (16), afin d'assurer la circulation de l'eau de l'installation dans l'installation de chauffage central et dans le filtre,
e. application de vibrations sur le ou chaque radiateur (22, 24, 26),
f. collecte de débris éventuellement recueillis par le filtre, puis
g. remplissage de l'installation de chauffage central avec l'eau du circuit, jusqu'au niveau de service.

2. Une méthode selon la revendication 1, dans laquelle les étapes sont effectuées en séquence dans l'ordre suivant : b), a), c) à e).

3. Une méthode selon la revendication 1 ou 2, dans laquelle le filtre magnétique se compose de deux chambres distinctes (32, 34), contenant chacune un filtre magnétique.

4. Une méthode selon une quelconque des revendications précédentes, dans laquelle au moins une partie de la tuyauterie reliant le filtre magnétique à la tuyauterie du circuit est transparente.

5. Une méthode selon une quelconque des revendications précédentes, dans laquelle on ajoute un produit de nettoyage dans l'eau de l'installation afin de renforcer le rendement du processus de nettoyage.

6. Une méthode selon la revendication 4, le produit de nettoyage étant ajoute entre les étapes b) et d).

7. Une méthode selon une quelconque des revendications précédentes, comprenant l'étape d'isolement du débit d'eau de l'installation dans l'installation de chauffage central à chaque radiateur à tour de rôle, en soumettant le radiateur, dans lequel s'écoule l'eau de l'installation, à des vibrations.

8. Une méthode selon la revendication 6, dans laquelle on utilise un dispositif vibratoire, comprenant une perceuse à percussion SDS et un marteau au bout substantiellement plat, pour soumettre chaque radiateur à des vibrations.

9. Une méthode selon une quelconque des revendications précédentes, dans laquelle l'installation de chauffage central est entièrement purgée puis remplie pour la mise en service après le point g).

10. Une méthode selon une quelconque des revendications précédentes, dans laquelle on ajoute un inhibiteur dans l'eau de l'installation de chauffage central préalablement à la mise en service de l'installation de chauffage central.
